# EUROPEAN PATENT SPECIFICATION

(11) **EP 4 197 896 B1**
(45) Date of publication and mention of the grant of the patent: **28.01.2026**
(21) Application number: 21215701.0
(22) Date of filing: 17.12.2021
(51) Int. Cl.: B63B 27/14, B63B 27/30, B63B 59/02, B63B 17/00, E02B 3/26

(54) **MARINE FENDER AND METHOD FOR TRANSFERRING A BODY BETWEEN A VESSEL AND AN OFFSHORE STRUCTURE**
SCHIFFSFENDER UND VERFAHREN ZUR ÜBERTRAGUNG EINES KÖRPERS ZWISCHEN EINEM SCHIFF UND EINER OFFSHORE-STRUKTUR
DÉFENSE D'ACCOSTAGE FLOTTANTE ET PROCÉDÉ DE TRANSFERT D'UN CORPS ENTRE UN NAVIRE ET UNE STRUCTURE EN MER

(43) Date of publication of application: 21.06.2023
(73) Proprietor: Ørsted Wind Power A/S, 7000 Fredericia (DK)
(72) Inventor: Schiøler, Peter Teglman, DK-2820 Gentofte (DK); Windolf, Mikkel Haugaard, DK-2820 Gentofte (DK)
(74) Representative: Gaunt, Thomas Derrick

(56) References cited:
- EP-A1- 3 647 178
- WO-A2-2011/154730
- DE-U1- 8 806 733
- GB-A- 2 483 401
- GB-A- 2 520 094
- KR-A- 20210 115 676

## Description

The present invention concerns a marine fender and a marine transfer method for transferring a body between a vessel and an offshore structure. The disclosure particularly concerns a marine transfer apparatus and method for use with a monopile offshore structure, such as a wind turbine generator having a monopile foundation. The disclosure is particularly relevant to a marine bumper for use when transferring a person between a crew transfer vessel and an offshore structure.

Transferring a body, such as a person or an object, between a marine vessel, such as a boat, and a fixed offshore structure can be a challenging and hazardous process. Waves in the water, caused by wind or swell, apply forces on the vessel, moving its position relative to the offshore structure. In particular, as waves pass through, movements of the vessel can be complex and difficult to predict because the vessel may be simultaneously subjected to both rotational motions, such as pitch, roll and yaw, as well as translational motions, such as heave, sway and surge. In some circumstances it may be possible to minimise motions such as roll, yaw, sway and surge by forcing the vessel and the structure together, for instance by driving the vessel into an offshore structure's boat landing using the vessel's propulsion system. This causes the vessel to push onto the foundation, thereby creating friction between the bow and the structure. The frictional engagement may also be improved by incorporating a non-slip fender on the vessel's bow, which also helps to prevent damage to the bow and the structure itselfby absorbing kinetic energy. However, vertical motions are nevertheless difficult to mitigate. For example, in small wave conditions, the bow may be kept in permanent engagement with the structure, but as the waves become bigger, there is a risk of a sudden slippage if the water level drops away from the vessel or it rapidly surges upwards. This risks rapid drops and upward rises of the vessel as the surfaces slide across each other. This makes such transfer operations especially hazardous because there is a risk that the crew member transferring could get caught between the vessel and the structure when they are attempting to transition from the vessel onto, for example, a static ladder provided on the exterior of the offshore structure.

To mitigate the above risks, it will often be the decision of the skipper or other responsible crew member to identify periods where safe personnel transfer can be effected. To aid this, some modern vessels incorporate wave detection systems linked to a traffic light-type indicator for identifying periods were crew may safely transfer. Nevertheless, periods where transfer can safely occur can be extremely short, with this meaning that transfer operations may not be able to take place because they are too dangerous to the personnel transferring.

Various alternative transfer methods have also been used. For example, helicopters can be used in some circumstances, and other solutions involve the use of motion compensated gangways between the vessel and a platform. However, such methods are expensive and are typically only possible with larger structures and using larger vessels. As such, these methods are rarely suitable for use with offshore wind turbine structures, where the monopile foundations are typically smaller, and have smaller boat landings and maintenance platforms. Furthermore, because monopile foundation structures are unmanned, it is much more difficult to implement systems which rely on active personnel on the platform.

Accordingly, there is a need for an improved marine transfer apparatus and method to facilitate safer transfer operations.

The present invention therefore seeks to address the above issues.

WO2011/154730 teaches a vessel which comprises a roller assembly, the assembly comprising at least one roller arranged to bear against a structure to be accessed, the assembly further comprising a damper to inhibit rotation of the roller such that the roller arranged to inhibit relative movement of the vessel to the structure and the vessel further comprising a gangway assembly for a vessel comprising a gangway, a pivotably mounted base, a sensor arrangement to sense movement of the vessel, an end portion of the gangway pivotably connected to the base and an actuator connected to the gangway responsive to signals from the sensor arrangement to control the vertical position of an opposite end portion of the gangway so as to compensate for vertical movement of the vessel, and the base arranged to respond to and compensate for roll of the vessel.

GB2483401 relates to a vessel comprising a deck including a pivoting portion. The pivoting portion has a pivot end connected to the rest of the deck by a pivot having its axis transverse to the bow to stern axis of the vessel. The pivoting portion can rotate about the bow to stern axis of the vessel and pivot about the axis transverse to the bow to stern axis. The vessel has a docking end, at or projecting beyond either the bow or the stern of the vessel, the docking end is distal to the pivot end, and is formed and arranged for connecting to a structure 18 in use of the vessel. The pivoting portion of the deck allows the vessel of the invention to connect with or dock to a structure, such as, for example the mast of an offshore wind turbine device and can allow safer transfer of personnel or equipment from the vessel to the structure.

EP3647178 teaches a ship comprising at least one hull and a bow part defining a forward direction of said ship. The bow part comprises at least one elastically deformable fender extending at least partially across said bow part with a given curvature in the cross-wise direction and having at least one concave engagement surface in said cross-wise direction. The engagement surface faces in said forward direction and is adapted to engage a structure during docking of the ship at said structure.

GB2520094 teaches a pole engagement device for a marine vessel which comprises a tapered recess for engaging with a docking pole of a marine structure such as a wind turbine. The recess has an opening for receiving the docking pole and a pair of opposed, converging faces and that in use contact either side of the docking pole when it is received within the recess. An inner end of the recess has a width less than that of the opening. The device is arranged such that in use the contact force between the docking pole and the pair of opposed faces is greater than a thrust force urging the docking pole into the recess, allowing for enhanced vessel stability during docking and crew transfer.

DE8806733 relates to a fender that is held movable on the side of a ship to protect against touching bank fortifications.

KR20210115676 relates to a marine structure capable of preventing a rotating function and ship damage and, more specifically, to a marine structure capable of preventing a rotating function and ship damage which is capable of evenly using the entire surface of a buffer unit to prevent wear caused by leaning towards one side of the buffer unit, thereby extending the service life of the buffer unit, and changes distance in accordance with the deformed shape of the buffer unit. A buffer unit rotates axially around the center of a rotary shaft and an impact applied by a ship specifies only a portion of the buffer unit to allow the entire surface of the buffer unit to become a contact surface while the buffer unit rotates without causing impact absorption to extend the service life. A tension spring or a compression spring is provided on a moving roller to change the center of the rotary shaft, and then the buffer unit can quickly return to the original state

According to a first aspect of the present invention, there is provided a marine fender for engaging an offshore structure during a transfer operation, the fender comprising: a mount for fixing the fender to a vessel; an engagement part comprising a roller for engaging with an opposing surface of the offshore structure when the vessel and opposing surface are forced together such that interface friction resists movement of the roller over the opposing surface; and a coupling rotatably connecting the roller to the mount, wherein the coupling comprises a regulating part for regulating the rotational speed of the roller to regulate the velocity of movement of the roller over the opposing surface. The regulating part comprises a computer regulated rotary damper, in which the resistance profile of the rotary damper is actively controlled in order to allow the speed of rotation of the roller to be varied throughout its movement to optimise the velocity control provided by the fender.

In this way, once the fender has engaged the outer surface of the offshore structure, such as a wind turbine monopile, the movements of the vessel relative to the structure may be moderated by regulating the movement of the engagement part over the opposing surface. As such, rapid changes in the position of the vessel, such as a ship, may be restrained. For example, as the hull passes through a wave trough, movement of the engagement part over the opposing surface may be controlled to slow the transition as the vessel drops to a lower position. Conversely, when a wave crest forces the vessel upwards, the transition to a higher position may be slowed. Accordingly, the length of time where a body may be safely transferred between the vessel and the structure is effectively extended. This is because the dramatic changes in vessel position, which may otherwise occur when the fender suddenly slips relative to the structure, are mitigated. As such, safer transfer operations may be conducted. Moreover, advantageously, because the marine fender may be fitted to the vessel, safer transfer operations may be facilitated without needing to adapt every offshore structure. As the regulating part comprises a damper, energy from the forces applied to the vessel may be dissipated through the damper to prevent rapid changes of position. For example, the damper may include a variable resistance gear in which the movement resistance is adjusted depending on the forces applied to the fender. A controller may be used to implement an anti-lock braking protocol by regulating the movement resistance using the controllable damper. In such arrangements, the damper is a computer regulated damper.

As the regulating part is configured to regulate the vertical velocity of the engagement part over the opposing surface., sudden falls and rises of the vessel may be mitigated.

In embodiments, the regulating part is configured to moderate movement between the engagement part relative to the mount for damping forces applied through the vessel to the opposing surface. In this way, the engagement part is moveable relative to the mount such that forces delivered through the engagement part's interface with the structure can be minimised.

In embodiments, the regulating part is configured to limit the amplitude of forces applied through the vessel to the opposing surface.

In embodiments, the regulating part is configured for limiting the amplitude of forces applied through the vessel to the opposing surface to less than the static friction between the engagement part and the opposing surface during the transfer operation. In this way, once engaged, uncontrolled slippage between the engagement part and the opposing surface may be avoided by dissipating the applied forces through a controlled movement.

As the engagement part comprises a roller, wherein the roller is rotatably connected to the mount by the coupling, and the regulating part regulates its rotational speed for regulating the velocity of movement of the engagement part over the opposing surface, movement of the fender may be regulated by controlling the speed of the roller. That is, the roller may have a rolling resistance which arrests rapid movements over the opposing surface.

As the regulating part comprises a rotary damper, a simple regulator may be used to slow down the motions of the engagement part.

In embodiments, the engagement part further comprises a second roller, wherein the second roller is rotatably connected to the mount by the coupling, and the regulating part regulates its rotational speed for regulating the velocity of movement of the engagement part over the opposing surface. In this way, a larger surface area for engagement with an offshore structure may be provided.

In embodiments, the engagement part forms a concave engagement interface to the opposing surface. In this way, a larger surface area may be provided for engaging with an opposing curved surface of the structure. As such, a higher interface friction may be provided, thereby allowing a greater resistance to interface failure.

In embodiments, when the engagement part comprises first and second rollers, and the rollers are supported by the coupling in a concave V-configuration for engaging with a curved opposing surface. In this way, when the opposing surface has a curved profile, such as a monopile, it may be wedged between the rollers for gripping the exterior of the structure.

In embodiments, the engagement part is for engagement with a monopile foundation. In this way, the engagement part may be shaped for mating to an exterior surface of the monopile for facilitating transfer of crew from a vessel, such as a maintenance boat, to the structure supported by the monopile foundation. In embodiments, the engagement part may be for engagement with a wind turbine monopile foundation.

According to a second aspect, there is provided a method for transferring a body between a vessel and an offshore structure in a transfer operation, the method comprising the steps of: providing a marine fender for engaging the offshore structure during the transfer operation, the fender being fixed to the vessel by a mount: forcing the vessel and the structure together to engage an engagement part of the fender with an opposing surface of the offshore structure such that interface friction resists movement of the engagement part over the opposing surface, wherein the engagement part comprises a roller; regulating the rotational speed of the roller to regulate the velocity of movement of the roller over the opposing surface using a regulating part of a coupling rotatable connecting the roller to the mount; and transferring the body between the vessel and the offshore structure, wherein the regulating part comprises a computer regulated rotary damper, in which the resistance profile of the rotary damper is actively controlled in order to allow the speed of rotation of the roller to be varied throughout its movement to optimise the velocity control provided by the fender. In this way, improved safety may be achieved during transfer operations by minimising rapid movements of the vessel and thereby extending the duration of periods within which safe transfer may be facilitated.

In embodiments, the step of regulating the velocity comprises limiting the amplitude of forces applied through the vessel to the opposing surface to less than the static friction between the engagement part and the opposing surface during the transfer operation.

According to a third aspect, there is provided a marine vessel, comprising: the marine fender according to any of the above.

Illustrative embodiments of the present invention will now be described with reference to the accompanying drawings in which:
Figure 1 shows a schematic side view of a marine fender according to a first embodiment during a wave crest;
Figure 2 shows a schematic side view of a marine fender of the first embodiment during a wave trough;
Figure 3 shows a schematic top view of a marine fender according to a second embodiment; and
Figure 4 shows a schematic side view of a marine fender according to a third embodiment.

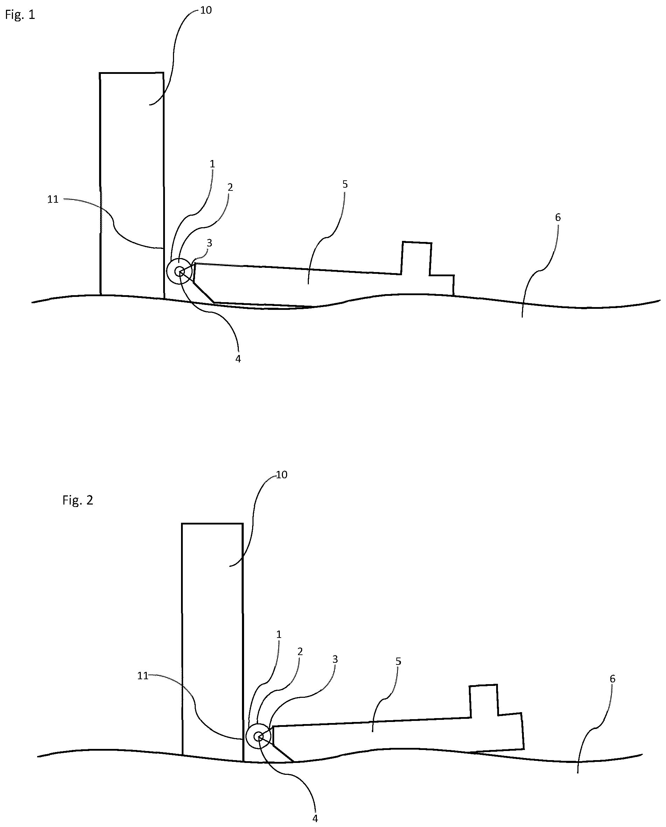

Figure 1 shows a first embodiment of a marine fender 1. In this embodiment, the fender 1 is configured for engagement with a wind turbine monopile 10 during a transfer operation in which crew is transferred between a boat 5 and so-called 'secondary steel', such as external ladders and platforms, provided on the monopile's exterior.

The fender 1 includes a frame 3 which is mounted at its rear to the bow of the boat 5. The front of the fender 1 comprises a roller 2 which forms an engagement part used to engage with the opposing surface 11 of the monopile 10. In this embodiment, the roller has a rubberised outer surface which forms a high friction interface when pressed against the monopile.

The roller 2 is held in a horizontal orientation and is connected to the frame 3 by a rotatable coupling 4. The coupling 4 comprises a horizontal axel which extends through the roller 2 and a rotary damper which restrains rotation of the roller about the axel. In this embodiment, the rotary damper is a computer regulated damper. In other embodiments, other damper mechanisms may be used, such as spring dampers or viscous rotary dampers, whereby rotation is resisted by the shearing of viscous fluid within the damper body. This thereby controls the speed of rotation of the roller 2.. In the case of computer regulated damper arrangements, the resistance profile of the damper may be controlled, for example based on feedback from force sensor and/or a wave prediction system. This may allow the speed of rotation of the roller 2 to be varied throughout its movement to optimise the velocity control provided by the fender.

In use, the boat 5 and monopile 10 are forced together, for example by driving the boat 5 toward the monopile 10, such that roller 2 is forced into engagement with the opposing surface 11 of the monopile body 10. In other embodiments, other mechanisms may be used to force the vessel and structure together, such as a magnetic arrangement which draws the surfaces together. In any case, the engagement force establishes static friction at the interface between the surface area of the roller 2 in contact with the monopile 10. At the same time, the restraining action of the rotary damper resists rotation of the roller 2 such that it is not free to roll vertically up or down the opposing surface 11. As such, the boat 5 is effectively pinned at its bow to the exterior of the monopile 10 through the fender 1, with the forward drive force of the boat's propeller pressing the interface surfaces together.

As shown in Figure 1, during a wave crest, the fender 1 may be pinned to the opposing surface 11 in a relatively high position. As waves 6 move past the monopile structure 10, wave troughs will cause the water level to move downward relative to the position of the boat 5. When the water level at the bow drops away, the downward force applied by gravity acts to drag the fender 1 downward. This downward force is initially resisted by the interface friction between the roller 2 and the opposing surface 11. However, rather than allow slippage to occur once the frictional resistance is overcome, the rotational damper provided in coupling 4 is configured to permit the roller 2 to roll down the monopile 10 in a controlled manner. As such, the boat 5 transitions slowly to a lower position, as shown in Figure 2, with some of the potential energy from the vertical transition being dissipated through the rotary damper.

Conversely, when the boat's bow is pinned in a lower position, it may be driven upward by its buoyancy against the surge of a wave crest. This upward movement is resisted by the roller 2, with the roller 2 configured to roll slowly under the control of the coupling 4

Accordingly, with the above arrangement, the risk of uncontrolled slippage between the fender 1 and the monopile 10 is mitigated. As such, rapid changes in the vertical position of the boat's bow may be avoided by damping movements caused by passing waves through the regulated movement of the roller 2. This thereby extends the time periods during which safe transfer of crew and other bodies between the boat 5 and monopile 10 may be achieved. Furthermore, although the horizontal roller 2 in this embodiment acts to regulate vertical movement, it will be understood that lateral and rotational forces applied through the interface are also resisted. Moreover, because slippage of the fender across the opposing surface is minimised, wear and other mechanical damage which might otherwise occur to the structure or its secondary steel is minimised.

In embodiments, the roller 2 may also be provided with a profile for more closely mating with the corresponding surface of the opposing structure. For instance, in the case of a monopile, the roller 2 may have a concave cylinder profile for mating with the curvature of the monopile body.

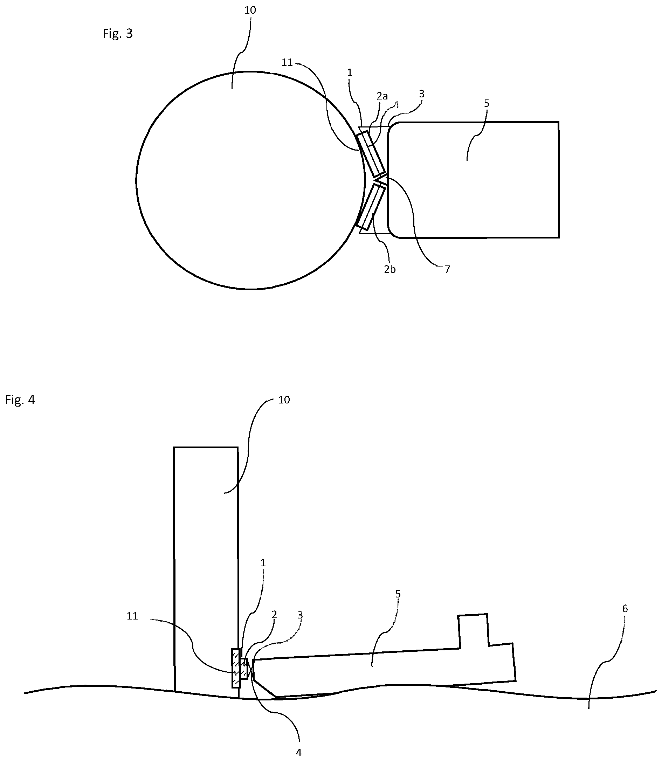

Figure 3 shows a schematic top view of a marine fender according to a second embodiment. This embodiment operates in substantially the same way as the first embodiment, except that a second roller 2b is provided. In this respect, first and second rollers 2a,2b are supported in a V-configuration by the frame 3, to form a combined concave engagement area which can be wedged onto the curved opposing surface 11 of the monopile 10. In this embodiment, the coupling 4 comprises two axels for supporting the rollers 2a,2b, with the axels connected to a central rotary damper 7 which regulates the rotational speed of both rollers 2a,2b for thereby resisting rapid changes in position of the boat 5 during the transfer operation. The provision of the two rollers 2a,2b in an angled configuration provides greater resistance to lateral forces applied to the boat 5, as well as a larger contact surface area for regulating vertical movements. In other embodiments, it is also envisaged that more than two rollers may be provided. For example, three rollers 2 may be used to further increase the frictional engagement with the foundation 10.

Figure 4 shows a schematic side view of a marine fender according to a third embodiment. This embodiment operates in a similar way to the first and second embodiments except that, rather than a roller, the engagement part is provided as an interface plate 2 which is moveably coupled to the mounting frame 3 by a coupling 4 comprising piston fluid viscous dampers. The coupling 4 allows the interface plate 2 to move vertically relative to the mounting frame 3 in a plane that is parallel to the vertical plane of the mounting. As such, the interface plate 2 can resistively shear vertically relative to its mounting. As such, the fender 1 effectively deforms in response to the forces applied to it. Consequently, upward or downward forces applied to the boat 5 are initially absorbed by the coupling 4, until it reaches the extremity of its moveable range. At this point, continued forces applied to the boat 5 may cause the interface place 2 to slip relative to the opposing surface 11. However, because the coupling 4 is able to regulate the initial movement of the boat before the interface friction is exceeded, an extended duration of time is provided where movement of the boat 5 is regulated, before slippage occurs.

Accordingly, as with other embodiments, the periods where the boat 5 moves in an uncontrolled manner are reduced, thereby minimising the occurrences of rapid changes in the vertical position of the bojy6at's bow. Accordingly, a safer method of transferring crew and other bodies between a boat and an offshore structure, such as a monopile, may thereby be provided.

It will be understood that the embodiments illustrated above show applications of the invention only for the purposes of illustration. In practice the invention may be applied to many different configurations, the detailed embodiments being straightforward for those skilled in the art to implement.

In this connection, for example, it will be understood that embodiments of the invention may be used in conjunction with other safety mechanisms and systems. For instance, a wave detection system with an indicator may be used to alert crew members to periods where safe transfer from a vessel to a structure may be facilitated. Advantageously, arrangements according to the claimed invention may extend these time periods by resisting vessel movements when the vessel is subjected to smaller waves and slowing vessel movements when larger waves hit.

It will also be understood that, in embodiments, the offshore structure may be provided with an adapted surface as the opposing surface for engagement by the engagement part. For example, a high-friction coating may be provided to increase the interface friction with the engagement part.

It is also envisaged that embodiments may be provided where a controllable frictional interface between the engagement part and the opposing surface is provided. This may be achieved, for instance, by providing a fluid feed at the coupling for selectively lubricating the contact area between the engagement part and the opposing surface. This may be used independently with a fixed engagement plate or in combination with a mechanically moveable engagement part. In periods where the vertical transition between a wave crest and trough are larger, liquid may be applied to lubricate the interface for controlling the fender's movement across the surface of the structure. This may allow a consistent and predicable movement, rather than a sudden drop or rise. Conversely, in periods where the vertical transition between a wave crest and trough are smaller, friction may be increased by removing the lubricant, thereby providing a more stable position of the vessel.

In addition, it will be understood that although the above illustrative embodiments show engagement of the fender directly into a monopile, the fender may be configured for engagement with other parts of the offshore structure. For example, in embodiments, the engagement part of the fender may be profiled for engagement with a boat landing or with secondary steel structures.

Furthermore, it will be understood that although the above illustrative embodiments have been described in the context of transfer operations involving crew, embodiments may also be applied to transfer operations involving objects, such as components, parts, and structural elements. Such objects may also be heavy, and a crane, hoisting system, or conveyer provided on the vessel may be used to lift and transfer the objects between the vessel and the structure. In such scenarios, the effect of moving the weight relative to the vessel may change the overall centre of gravity, thereby applying forces to the vessel which act on it to move in the water. Embodiments of the invention may therefore equally be used to resist and regulate these movements during the object transfer operation.

Finally, it will also be understood that embodiments of the invention are also applicable to transfer operations between a vessel and a floating offshore structure, such as a floating wind turbine or platform. In such scenarios, both the vessel and the structure may move in the waves. However, because the vessel and the structure can have, for instance, different weights, shapes, different centres of gravity, different buoyancies, and be influenced by wind differently, they may move differently in the water. Nevertheless, embodiments of the invention may similarly be used to resist and regulate relative movements between the two engaged parts, thereby allowing safer object transfer operations between the vessel and the structure.

## Claims

1. A marine fender (1) for engaging an offshore structure (10) during a transfer operation, the fender (1) comprising:
a mount (3) for fixing the fender (1) to a vessel (5);
an engagement part (2) comprising a roller (2A, 2B) for engaging with an opposing surface (11) of the offshore structure (10) when the vessel (5) and opposing surface (11) are forced together such that interface friction resists movement of the roller (2A, 2B) over the opposing surface (11); and
a coupling (4) rotatably connecting the roller (2A, 2B) to the mount (3), wherein the coupling (4) comprises a regulating part for regulating the rotational speed of the roller (2A, 2B) to regulate the velocity of movement of the roller (2A, 2B) over the opposing surface (11);
**characterised in that** the regulating part comprises a computer regulated rotary damper, in which the resistance profile of the rotary damper is actively controlled in order to allow the speed of rotation of the roller (2A, 2B) to be varied throughout its movement to optimise the velocity control provided by the fender (1).

2. A fender (1) according to claim 1, wherein the regulating part is configured to moderate movement between the engagement part (2) relative to the mount (3) for damping forces applied through the vessel (5) to the opposing surface (11).

3. A fender (1) according to claim 3, wherein the regulating part is configured to limit the amplitude of forces applied through the vessel (5) to the opposing surface (11).

4. A fender (1) according to claim 1, wherein the regulating part is configured for limiting the amplitude of forces applied through the vessel (5) to the opposing surface (11) to less than the static friction between the engagement part (2) and the opposing surface (11) during the transfer operation.

5. A fender (1) according to any preceding claim, wherein the engagement part (2) further comprises a second roller (2A, 2B), wherein the second roller (2A, 2B) is rotatably connected to the mount by the coupling (4), and the regulating part regulates its rotational speed for regulating the velocity of movement of the engagement part (2) over the opposing surface (11).

6. A fender (1) according to any preceding claim, wherein the engagement part (2) forms a concave engagement interface to the opposing surface (11).

7. A fender (1) according to claim 6, wherein, when the engagement part (2) comprises first and second rollers (2A, 2B), and the rollers (2A, 2B) are supported by the coupling (4) in a concave V-configuration for engaging with a curved opposing surface (11).

8. A fender (1) according to any preceding claim, wherein the engagement part (2) is for engagement with a monopile foundation.

9. A method for transferring a body between a vessel (5) and an offshore structure (10) in a transfer operation, the method comprising the steps of:
providing a marine fender (1) for engaging the offshore structure (10) during the transfer operation, the fender (1) being fixed to the vessel (5) by a mount (3):
forcing the vessel (5) and the structure (10) together to engage an engagement part (2) of the fender (1) with an opposing surface (11) of the offshore structure (10) such that interface friction resists movement of the engagement part (2) over the opposing surface (11), wherein the engagement part (2) comprises a roller (2A, 2B);
regulating the rotational speed of the roller (2A, 2B) to regulate the velocity of movement of the roller (2A, 2B) over the opposing surface (11) using a regulating part of a coupling (4) rotatably connecting the roller (2A, 2B) to the mount (3); and
transferring the body between the vessel (5) and the offshore structure (10);
**characterised in that** the regulating part comprises a computer regulated rotary damper, in which the resistance profile of the rotary damper is actively controlled in order to allow the speed of rotation of the roller (2A, 2B) to be varied throughout its movement to optimise the velocity control provided by the fender (1).

10. A method according to claim 9, wherein the step of regulating the velocity comprises limiting the amplitude of forces applied through the vessel (5) to the opposing surface (11) to less than the static friction between the engagement part (2) and the opposing surface (11) during the transfer operation.

11. A marine vessel (5), comprising the marine fender (1) according to any of claims 1 to 8.

## Patentansprüche

1. Marinefender (1) zum Eingreifen in eine Offshore-Struktur (10) während eines Übergabevorgangs, der Fender (1) umfassend:
eine Halterung (3) zum Befestigen des Fenders (1) an einem Schiff (5);
ein Eingriffsteil (2), das eine Rolle (2A, 2B) umfasst, um in eine gegenüberliegende Fläche (11) der Offshore-Struktur (10) einzugreifen, wenn das Schiff (5) und die gegenüberliegende Fläche (11) so zusammengedrückt werden, dass die Grenzflächenreibung einer Bewegung der Rolle (2A, 2B) über die gegenüberliegende Fläche (11) entgegenwirkt; und
eine Kupplung (4), die drehbar die Rolle (2A, 2B) mit der Halterung (3) verbindet, wobei die Kupplung (4) ein Einstellteil zum Einstellen der Drehgeschwindigkeit der Rolle (2A, 2B) umfasst, um die Bewegungsgeschwindigkeit der Rolle (2A, 2B) über die gegenüberliegende Fläche (11) einzustellen;
**dadurch gekennzeichnet, dass** das Einstellteil einen computergesteuerten Rotationsdämpfer umfasst, in dem das Widerstandsprofil des Rotationsdämpfers aktiv geregelt wird, um eine Variation der Drehgeschwindigkeit der Rolle (2A, 2B) bei ihrer Bewegung zu erlauben, und so die vom Fender (1) bereitgestellte Geschwindigkeitssteuerung zu optimieren.

2. Fender (1) nach Anspruch 1, wobei das Einstellteil so konfiguriert ist, dass es eine Bewegung zwischen dem Eingriffsteil (2) im Verhältnis zu der Halterung (3) abbremst, um Kräfte abzuschwächen, die über das Schiff (5) auf die gegenüberliegende Oberfläche (11) ausgeübt werden.

3. Fender (1) nach Anspruch 3, wobei das Einstellteil so konfiguriert ist, dass es eine maximale Auslenkung von Kräften, die über das Schiff (5) auf die gegenüberliegende Oberfläche (11) ausgeübt werden, begrenzt.

4. Fender (1) nach Anspruch 1, wobei das Einstellteil konfiguriert ist, die maximale Auslenkung von Kräften, die über das Schiff (5) auf die gegenüberliegende Fläche (11) ausgeübt werden, auf weniger als die Haftreibung zwischen dem Eingriffsteil (2) und der gegenüberliegenden Fläche (11) während des Übergabevorgangs zu begrenzen.

5. Fender (1) nach einem der vorstehenden Ansprüche, wobei das Eingriffsteil (2) ferner eine zweite Rolle (2A, 2B) umfasst, wobei die zweite Rolle (2A, 2B) drehbar über die Kupplung (4) mit der Halterung verbunden ist, und das Einstellteil seine Drehgeschwindigkeit einstellt, um die Geschwindigkeit einer Bewegung des Eingriffsteils (2) über die gegenüberliegende Fläche (11) zu regeln.

6. Fender (1) nach einem der vorstehenden Ansprüche, wobei das Eingriffsteil (2) eine konkave Eingriffsschnittstelle zu der gegenüberliegenden Fläche (11) bildet.

7. Fender (1) nach Anspruch 6, wobei, wenn das Eingriffsteil (2) erste und zweite Rollen (2A, 2B) umfasst, die Rollen (2A, 2B) von der Kupplung (4) in einer konkaven V-Konfiguration gehalten werden, um in eine gewölbte gegenüberliegende Fläche (11) einzugreifen.

8. Fender (1) nach einem der vorstehenden Ansprüche, wobei das Eingriffsteil (2) für den Eingriff in ein Monopile-Fundament vorgesehen ist.

9. Verfahren zum Übergeben eines Gegenstands zwischen einem Schiff (5) und einer Offshore-Struktur (10) in einem Übergabevorgang, wobei das Verfahren die folgenden Schritte umfasst:
Bereitstellen eines Marinefenders (1) zum Eingreifen in die Offshore-Struktur (10) während des Übergabevorgangs, wobei der Fender (1) an dem Schiff (5) über eine Halterung (3) befestigt ist:
Zusammendrücken des Schiffs (5) und der Struktur (10), damit ein Eingriffsteil (2) des Fenders (1) so in eine gegenüberliegende Fläche (11) der Offshore-Struktur (10) eingreift, dass eine Grenzflächenreibung einer Bewegung des Eingriffsteils (2) über die gegenüberliegende Fläche (11) entgegenwirkt, wobei das Eingriffsteil (2) eine Rolle (2A, 2B) umfasst;
Einstellen der Drehgeschwindigkeit der Rolle (2A, 2B), um die Geschwindigkeit einer Bewegung der Rolle (2A, 2B) über die gegenüberliegende Fläche (11) unter Verwendung eines Einstellteils einer Kupplung (4) einzustellen, die drehbar die Rolle (2A, 2B) mit der Halterung (3) verbindet; und
Übergeben des Gegenstands zwischen dem Schiff (5) und der Offshore-Struktur (10);
**dadurch gekennzeichnet, dass** das Einstellteil einen computergesteuerten Rotationsdämpfer umfasst, in dem das Widerstandsprofil des Rotationsdämpfers aktiv geregelt wird, um eine Variation der Drehgeschwindigkeit der Rolle (2A, 2B) bei ihrer Bewegung zu erlauben, und so die vom Fender (1) bereitgestellte Geschwindigkeitsregelung zu optimieren.

10. Verfahren nach Anspruch 9, wobei der Schritt des Einstellens der Geschwindigkeit das Begrenzen der maximalen Auslenkung von Kräften, die über das Schiff (5) auf die gegenüberliegende Fläche (11) ausgeübt werden, auf weniger als die Haftreibung zwischen dem Eingriffsteil (2) und der gegenüberliegenden Fläche (11) während des Übergabevorgangs umfasst.

11. Schiff (5), umfassend den Marinefender (1) nach einem der Ansprüche 1 bis 8.

## Revendications

1. Défense d'accostage marine (1) destinée à entrer en contact avec une structure en mer (10) pendant une manœuvre de transfert, la défense d'accostage (1) comprenant :
un montage (3) destiné à fixer la défense d'accostage (1) à un navire (5) ;
une partie d'entrée en contact (2) comprenant un rouleau (2A, 2B) destiné à entrer en contact avec une surface opposée (11) de la structure en mer (10) lorsque le navire (5) et la surface opposée (11) sont forcés l'un contre l'autre de sorte que le frottement à l'interface résiste au mouvement du rouleau (2A, 2B) sur la surface opposée (11) ; et
un accouplement (4) reliant de manière rotative le rouleau (2A, 2B) au montage (3), l'accouplement (4) comprenant une partie de régulation destinée à réguler la vitesse de rotation du rouleau (2A, 2B) afin de réguler la vitesse de déplacement du rouleau (2A, 2B) sur la surface opposée (11) ;
**caractérisé en ce que** la partie de régulation comprend un amortisseur rotatif régulé par ordinateur, dans lequel le profil de résistance de l'amortisseur rotatif est activement commandé afin de permettre de faire varier la vitesse de rotation du rouleau (2A, 2B) tout au long de son mouvement pour optimiser la commande de vitesse fournie par la défense d'accostage (1).

2. Défense d'accostage (1) selon la revendication 1, dans laquelle la partie de régulation est conçue pour modérer le mouvement entre la partie d'entrée en contact (2) par rapport au montage (3) destiné à amortir les forces appliquées par l'intermédiaire du navire (5) sur la surface opposée (11).

3. Défense d'accostage (1) selon la revendication 3, dans laquelle la partie de régulation est conçue pour limiter l'amplitude des forces appliquées par l'intermédiaire du navire (5) à la surface opposée (11).

4. Défense d'accostage (1) selon la revendication 1, dans laquelle la partie de régulation est conçue pour limiter l'amplitude des forces appliquées par l'intermédiaire du navire (5) à la surface opposée (11) à une valeur inférieure au frottement statique entre la partie d'entrée en contact (2) et la surface opposée (11) pendant la manœuvre de transfert.

5. Défense d'accostage (1) selon une quelconque revendication précédente, dans laquelle la partie d'entrée en contact (2) comprend en outre un second rouleau (2A, 2B), dans laquelle le second rouleau (2A, 2B) est relié de manière rotative au montage par l'accouplement (4), et la partie de régulation régule sa vitesse de rotation destinée à réguler la vitesse de déplacement de la partie d'entrée en contact (2) sur la surface opposée (11).

6. Défense d'accostage (1) selon une quelconque revendication précédente, dans laquelle la partie d'entrée en contact (2) forme une interface d'entrée en contact concave avec la surface opposée (11).

7. Défense d'accostage (1) selon la revendication 6, dans laquelle, lorsque la partie d'entrée en contact (2) comprend des premier et second rouleaux (2A, 2B), et les rouleaux (2A, 2B) sont supportés par l'accouplement (4) dans une configuration en V concave destinée à entrer en contact avec une surface opposée incurvée (11).

8. Défense d'accostage (1) selon une quelconque revendication précédente, dans laquelle la partie d'entrée en contact (2) est destinée à entrer en contact avec une fondation monopile.

9. Procédé destiné au transfert d'un corps entre un navire (5) et une structure en mer (10) dans une manœuvre de transfert, le procédé comprenant les étapes suivantes :
la fourniture d'une défense d'accostage marine (1) destinée à entrer en contact avec la structure en mer (10) pendant la manoeuvre de transfert, la défense d'accostage (1) étant fixée au navire (5) par un montage (3) :
forçant le navire (5) et la structure (10) conjointement pour entrer en contact avec une partie d'entrée en contact (2) de la défense d'accostage (1) avec une surface opposée (11) de la structure en mer (10) de sorte que le frottement d'interface résiste au mouvement de la partie d'entrée en contact (2) sur la surface opposée (11), dans lequel la partie d'entrée en contact (2) comprend un rouleau (2A, 2B) ;
la régulation de la vitesse de rotation du rouleau (2A, 2B) pour réguler la vitesse de déplacement du rouleau (2A, 2B) sur la surface opposée (11) au moyen d'une partie de régulation d'un accouplement (4) reliant de manière rotative le rouleau (2A, 2B) au montage (3) ; et
le transfert du corps entre le navire (5) et la structure en mer (10) ;
**caractérisé en ce que** la partie de régulation comprend un amortisseur rotatif régulé par ordinateur, dans lequel le profil de résistance de l'amortisseur rotatif est activement commandé afin de permettre de faire varier la vitesse de rotation du rouleau (2A, 2B) tout au long de son mouvement pour optimiser la commande de vitesse fournie par la défense d'accostage (1).

10. Procédé selon la revendication 9, dans laquelle l'étape de régulation de la vitesse comprend la limitation de l'amplitude des forces appliquées par l'intermédiaire du navire (5) à la surface opposée (11) à une valeur inférieure au frottement statique entre la partie d'entrée en contact (2) et la surface opposée (11) pendant la manœuvre de transfert.

11. Navire de mer (5), comprenant la défense d'accostage (1) selon l'une quelconque des revendications 1 à 8.
